# EUROPÄISCHE PATENTSCHRIFT

(11) **EP 2 979 534 B1**
(45) Veröffentlichungstag und Bekanntmachung des Hinweises auf die Patenterteilung: **07.06.2017**
(21) Anmeldenummer: 15179390.8
(22) Anmeldetag: 31.07.2015
(51) Int. Cl.: A01D 89/00, F16C 1/02, F16C 27/06

(54) **ERNTEGUTAUFNEHMER MIT EINER ELASTISCHEN WELLE**
CROP COLLECTING DEVICE WITH AN ELASTIC SHAFT
RECOLTEUSE DOTEE D'UN ARBRE ELASTIQUE

(30) Priorität: 31.07.2014 DE 102014110917
(43) Veröffentlichungstag der Anmeldung: 03.02.2016
(73) Patentinhaber: Reiter, Thomas, 4707 Schlüsselberg (AT)
(72) Erfinder: Reiter, Thomas, 4707 Schlüsselberg (AT)
(74) Vertreter: Puschmann Borchert Bardehle Patentanwälte Partnerschaft mbB

(56) Entgegenhaltungen:
- EP-A2- 0 236 106
- WO-A1-2014/040953
- DD-A1- 143 496
- US-A- 2 608 451

## Beschreibung

Die Erfindung betrifft einen Erntegutaufnehmer mit einer elastischen Welle gemäß dem Oberbegriff des Anspruchs 1.

Bei Landmaschinen im Futtererntebereich werden Erntegutaufnehmer, auch als Pick-Up bezeichnet, als Funktionseinheiten in unterschiedlichsten Erntemaschinen wie beispielsweise Bandschwader, Ballenpresse oder Feldhäcksler eingesetzt.

So offenbart die WO 2014/040953 A1 einen Erntegutaufnehmer mit einer elastischen Welle, die von wenigstens zwei Wellenlagern getragen wird, die mit einer Bodenführungseinheit verbunden sind, welche ein elastisches Joch aufweist. Die elastische Welle trägt Zinkenscheiben zur Aufnahme von Erntegut vom Boden. Durch die Anpassung der Bodenführungseinheit und der Welle an die Bodenkontur kann eine verschmutzungsarme Erntegutaufnahme erreicht werden.

Als nachteilig hat sich herausgestellt, dass am Übergang der Lagerstelle zur Welle bei der Durchbiegung der Welle Spannungsspitzen auftreten, die ein erhöhtes Bruchrisiko und erhöhten Verschleiß zur Folge haben.

Es ist Aufgabe der Erfindung, einen Erntegutaufnehmer anzugeben, der eine elastische Welle umfasst und eine verbesserte Dauerfestigkeit der Welle aufweist.

Die Unteransprüche bilden vorteilhafte Weiterbildungen der Erfindung.

In bekannter Weise umfasst ein gattungsgemäßer Erntegutaufnehmer eine elastische Welle, die über wenigstens zwei Wellenlagerelementen mit einer Bodenführungseinheit verbunden ist, wobei eine Durchbiegung der Welle zwischen den Wellenlagerelementen möglich ist.

Erfindungsgemäß ist vorgesehen, dass zwischen der Welle und dem Wellenlagerelement eine insbesondere rohrartige Hülsenanordnung umfassend wenigstens eine rohrartige Hülsenkomponente angeordnet ist, welche die elastische Welle bereichsweise versteift. Die Hülsenkomponente ist wenigstens bereichsweise über ein Elastomer-Element mit der elastischen Welle verbunden. Vorzugsweise ist das Elastomer-Element am Ende der Hülsenkomponente, also am Übergang zum hülsenfreien Bereich der elastischen Welle, angeordnet.

Auf diese Weise können am Übergang vom versteiften zum elastischen Bereich der elastischen Welle Spannungsspitzen durch das Elastomer-Element kompensiert werden. Dies reduziert die Materialermüdung in diesem Bereich, was die Dauerfestigkeit der Welle erhöht.

In einer besonders vorteilhaften Ausführungsform ist vorgesehen, dass die Hülsenanordnung wenigstens bereichsweise über ein Klemmelement mit der Welle verbunden ist, wobei das Elastomer-Element im Bereich des Klemmelements angeordnet ist. Dadurch kann eine spiel- und verschleißfreie Befestigung geschaffen werden.

Wird die Hülsenanordnung über eine Klemmverbindung mit der Welle verbunden, kann eine besonders platzsparende Ausgestaltung umgesetzt werden.

Insbesondere, wenn die Hülsenanordnung eine erste Hülsenkomponente umfasst, die an eine zweite Hülsenkomponente, die wiederum mit einem Elastomer versehen ist, so gefügt ist, dass sich das Elastomer-Element im Übergang von der ersten zur zweiten Hülsenkomponente befindet.

Vorzugsweise kann die zweite Hülsenkomponente einen Klemmbereich aufweisen, der von der ersten Hülsenkomponente in Axialrichtung beabstandet ist. Dadurch kann ein kleiner Durchmesser der Hülsenanordnung erreicht werden.

Die erste Hülsenkomponente kann ebenfalls einen Klemmbereich aufweisen, mit welchem die erste Hülsenkomponente an der Welle fixiert wird.

Die erste Hülsenkomponente kann auch formschlüssig mit der Welle verbunden sein, wobei vorzugsweise eine drehfeste Verbindung formschlüssiger Weise bereitgestellt wird.

Gemäß einer weiteren vorteilhaften Ausgestaltung kann die erste Hülsenkomponente auch an beiden Enden durch je eine zweite einen Klemmbereich aufweisende Hülsenkomponente begrenzt sein, wobei die zweite Hülsenkomponente über ein Elastomer-Element an die erste Hülsenkomponente angebunden ist.

Insbesondere ist das Elastomer-Element stoffschlüssig mit der zweiten Hülsenkomponente verbunden. Das Elastomer-Element kann so, wenn es mit der zweiten Hülsenkomponente beispielsweise in Form einer Beschichtung fest verbunden ist, einen losen elastischen Übergang von der Welle zur ersten Hülsenkomponente bereitstellen, indem die zweite Hülsenkomponente unverschieblich zur ersten Hülsenkomponente überlappend in dieser gehalten wird. So kann technisch einfach über eine Steckverbindung ein weicher Übergang von Welle zu Wellenlager bereitgestellt werden.

Alternativ kann das Elastomer-Element auch mit der ersten und der zweiten Hülsenkomponente fest verbunden sein.

In einer bevorzugten Gestaltung kann das Elastomer-Element in radialer Richtung zwischen der ersten und der zweiten Hülsenkomponente liegen. Die erste und die zweite Hülsenkomponente sind dabei konzentrisch angeordnet. Entsprechend kann die zweite Hülsenkomponente einen Außendurchmesser aufweisen, der geringer als der Innendurchmesser der ersten Hülsenkomponente ist.

In bevorzugter Weise kann das Elastomer-Element asymmetrisch ausgebildet sein, wobei dieses in seinem axialen Mittelbereich einen verjüngten Längsschnitt aufweist.

Durch die erfindungsgemäße Gestaltung der Hülsenanordnung, welche die elastische Welle mit dem Wellenlager verbindet, kann eine an die Bodenkontur angepasste elastische Verformung der Welle erfolgen, wobei vom Übergang der Hülsenanordnung zur Welle die Spannungsspitzen erheblich reduziert sind.

Das Elastomer-Element kann im Längsschnitt betrachtet in unterschiedlichsten Formgebungen ausgeführt sein, insbesondere gerade, keilförmig oder s-förmig.

In einer bevorzugten Ausgestaltung weist die Hülsenanordnung eine erste Hülsenkomponente auf, die in einen Verbindungsbereich, insbesondere Klemmbereich, mit der Welle verbunden ist. Ferner weist die Hülsenanordnung eine zweite Hülsenkomponente auf, die ebenfalls in einen Verbindungsbereich, insbesondere, Klemmbereich mit der Welle verbunden ist. Die Verbindungsbereiche sind in axialer Richtung beabstandet, wobei insbesondere der Bereich zwischen den beiden Verbindungsbereichen keine Verbindung zur ersten oder zweiten Hülsenkomponente aufweist. Der Abstand der Verbindungsbereiche, insbesondere Klemmbereiche kann vorzugsweise das 5 bis 10-fache des Nenndurchmessers der Welle betragen. Mit dieser Dimensionierung wird eine entsprechende Kraft auf das Elastomer-Element erzeugt, wodurch ein weicher Übergang bei der Biegung der elastischen Welle an der Übergangsstelle im Klemmbereich realisiert wird. Der Nenndurchmesser der elastischen Welle entspricht bei einer Polygonwelle, insbesondere Sechskantwelle, der Schlüsselweite.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1a: eine perspektivische Ansicht einer Aufnahmeeinheit;
- Fig. 1b: eine perspektivische Teilschnittansicht eines äußeren Wellenlagers;
- Fig. 1c: eine perspektivische Teilschnittansicht eines mittleren Wellenlagers;
- Fig. 2: eine Schnittansicht einer erfindungsgemäßen äußeren Hülsenanordnung;
- Fig. 3: eine Schnittansicht einer erfindungsgemäßen mittleren Hülsenanordnung, und
- Fig. 4: eine Schnittansicht einer Hülsenanordnung;

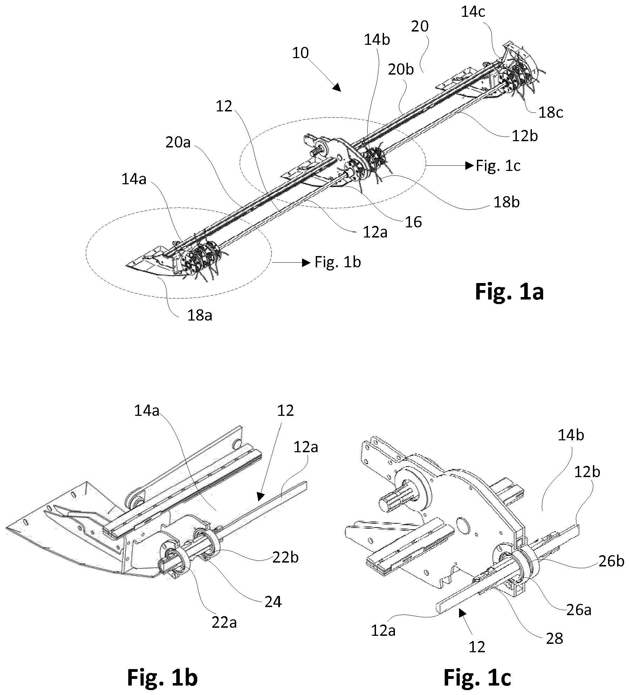

Fig. 1 a zeigt die Aufnahmeeinheit eines erfindungsgemäßen Erntegutaufnehmers 10, der eine elastische Welle 12 umfasst, welche durch drei Lagerelemente 14a, 14b, 14c mit einer Bodenführungseinheit 16 verbunden sind. Die Bodenführungseinheit weist Gleitkufen 18a, 18b, 18c auf, die über elastisches Joch 20, welches zwei Jochteile 20a, 20b umfasst, verbunden sind, wodurch eine Anpassung der Bodenführungseinheit 16 an die Bodenkontur erfolgt. Auf diese Weise kann die elastische Welle 12 eine an die Bodenkontur angepasste Durchbiegung ausführen.

Fig. 1b und 1c zeigen in eine Teilschnittansicht der Fig. 1 a, bei welcher die Zinkenscheiben ausgeblendet wurden. Fig. 1b zeigt dabei das äußere Lagerelement 14a, wobei Fig. 1c das mittlere Lagerelement 14b umfassend einen Wellenantrieb darstellt.

Das in Fig. 1b dargestellte Lagerelement 14a weist zwei Radialkugellager 22a, 22b auf. Die elastische Teilwelle 12a der elastischen Welle 12 ist über eine Hülsenanordnung 24 mit den Radialkugellagern 22a, 22b des Lagerelements 14a verbunden.

Gemäß dieser Ausgestaltung wird die Biegelinie der elastischen Teilwelle 12a gemäß der Bodenkontur aufgeprägt. Dennoch ergeben sich im Übergang von Hülsenanordnung 24 zur elastischen Teilwelle 12a Spannungsspitzen, die zur Ermüdung der elastischen Welle 12 und letztendlich zum vorzeitigen Bruch führen.

Eine ähnliche Situation ergibt sich bei dem in Fig. 1c gezeigten Lagerelement 14b, welches den Antrieb umfasst. Hier verbindet ebenfalls ein Hülsenanordnung 28 die beiden Teilwellen 12a, 12b mit zwei Radialkugellagern 26a, 26b. Im Gegensatz zu der in Fig. 1b gezeigten Situation ergeben sich hier beidseitig der Hülsenanordnung 28 am Übergang von der Hülsenanordnung 28 zur elastischen Welle 12 Spannungsspitzen.

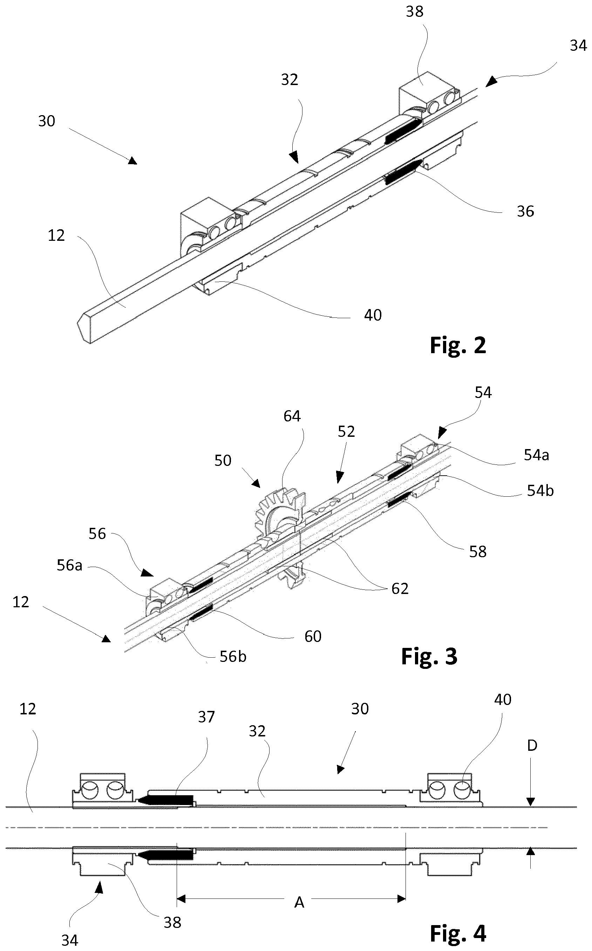

Fig. 2 zeigt eine erfindungsgemäße Hülsenanordnung 30 mit einer ersten Hülsenkomponente 32 und einer zweiten Hülsenkomponente 34. Die erste Hülsenkomponente 32 und die zweite Hülsenkomponente 34 sind derart ausgestaltet, dass die zweite Hülsenkomponente 34 in Radialrichtung eine wenigstens bereichsweise geringere Ausdehnung hat als die erste Hülsenkomponente 32 und so in diese hineinragen kann. Die zweite Hülsenkomponente 34 ist in dieser Ausführung bereichsweise innerhalb der ersten Hülsenkomponente 32 gelagert. Der Übergang von der ersten Hülsenkomponente 32 zur zweiten Hülsenkomponente 34 in diesem Bereich wird durch eine Elastomer-Schicht 36 gebildet. In dieser speziellen Ausgestaltung ist die zweite Hülsenkomponente 34 mit einem Klemmelement 38 versehen, die eine kraftschlüssige, spielfreie und drehfeste Verbindung mit der elastischen Welle 12 herstellt. Auch die erste Hülsenkomponente 32 ist mit einem Klemmelement 40 versehen, der die erste Hülsenkomponente 32 in Axialrichtung kraftschlüssig und in Drehrichtung formschlüssig an der elastischen Welle 12 fixiert. Besonders gut zu erkennen ist die im Längsschnitt dargestellte Ausgestaltung der Elastomer-Übergangsschicht 36, die im Wesentlichen S-förmig gestaltet ist, um der Biegebewegung der elastischen Welle 12 Rechnung zu tragen. Insbesondere ist eine Verstärkung der in axialer Richtung außenliegenden Bereiche der Elastomer-Schicht 36 vorgesehen, um den Knickanforderungen bzw. Biegeanforderungen der elastischen Welle 12 Rechnung zu tragen.

Aufgrund des Elastomer-Übergangs erfolgt die Biegung der elastischen Welle 12 unter Vermeidung von Spannungsspitzen im Übergang der Hülsenanordnung 30 zur elastischen Welle 12.

Fig. 3 zeigt eine Hülsenanordnung 50, die für den Einsatz in der Mitte einer angetriebenen elastischen Welle 12 gedacht ist, das über das formschlüssig mit der Hülsenanordnung 50 verbundene Antriebszahnrad 64 angetrieben wird.

Die Hülsenanordnung 50 umfasst eine erste Hülsenkomponente 52 sowie zwei äußere Hülsenkomponenten 54, 56. Die Hülsenkomponente 54 weist ein Klemmelement 54a und ein Hülsenelement 54b auf. Die Hülsenkomponente 56 weist analog ein Klemmelement 56a und ein Hülsenelement 56b auf. Die Hülsenkomponente 54, 56 kann ein oder mehrteilig ausgeführt sein. Wie in Fig. 2 beschrieben, ist im Übergang von der zweiten Hülsenkomponente 54, 56 zu der ersten Hülsenkomponente 52 jeweils eine Elastomer-Schicht 58, 60 in radialer Richtung vorgesehen.

Die erste Hülsenkomponente 52 ist über Verbindungsmittel 62 formschlüssig in Drehrichtung mit der Sechskantwelle verbunden. Zu bemerken ist, dass die Befestigungspunkte der ersten Hülsenkomponente 50 und der zweiten Hülsenkomponente 54, 56 beabstandet angeordnet sind. Aufgrund der Verbindung der ersten Hülsenkomponente 52 mit der zweiten Hülsenkomponente 54, 56 über die Elastomer-Schicht besteht auch eine geringfügige axiale Bewegungsfreiheit zwischen den beiden zweiten Hülsenkomponenten 54, 56 bzw. zwischen der ersten Hülsenkomponente 52 und den zweiten Hülsenkomponenten 54, 56.

Dadurch wird eine sanfte Verformung der elastischen Welle 12 unterstützt, ohne dass Spannungsspitzen im Übergangsbereich zwischen der Hülsenanordnung 50 und der Welle 12 auftreten. Dadurch wird eine erhöhte Lebensdauer der Welle 12 erreicht.

Fig. 4 zeigt eine Schnittansicht einer erfindungsgemäßen Hülsenanordnung 30 des Übergangsbereichs zwischen der ersten Hülsenkomponente 32 und der zweiten Hülsenkomponente 34, die über das Elastomer-Element 37 in Verbindung stehen. Gut an dieser Darstellung zu erkennen ist das Klemmelement 40, das in einen nicht-klemmenden Bereich der ersten Hülsenkomponente 32 übergeht.

Das Klemmelement 40 der ersten Hülsenkomponente 32 und das Klemmelement 38 der zweiten Hülsenkomponente 34 sind im Abstand A angeordnet. Der Durchmesser der elastischen Welle 12 beträgt D, wobei das Verhältnis D/A kleiner als 1/4 sein kann, insbesondere im Bereich zwischen 1/5 und 1/10 liegt. In der dargestellten Ausführung etwa 1/6. Das Elastomer-Element 37, das zwischen der ersten Hülsenkomponente 32 und der zweiten Hülsenkomponente 34 angeordnet ist, ist im Wesentlichen zylindrisch ausgestaltet, weist also im Längsschnitt eine gerade Form auf. Der Durchmesser entspricht bei einer Polygonwelle, insbesondere Sechskantwelle, der Schlüsselweite.

### Bezugszeichen liste

- 10: Erntegutaufnehmer
- 12: elastische Welle
- 12a, 12b: elastische Teilwelle
- 14a: Lagerelement
- 14b: Lagerelement
- 14c: Lagerelement
- 16: Bodenführungseinheit
- 18a: Gleitkufe
- 18b: Gleitkufe
- 18c: Gleitkufe
- 20: elastisches Joch
- 20a: Jochteil
- 20b: Jochteil
- 22a: Radialkugellager
- 22b: Radialkugellager
- 24: Hülsenanordnung
- 26a: Radialkugellager
- 26b: Radialkugellager
- 28: Hülsenanordnung
- 30: Hülsenanordnung
- 32: erste Hülsenkomponente
- 34: zweite Hülsenkomponente
- 36: Elastomer-Schicht
- 37: Elastomer-Element
- 38: Klemmelement
- 40: Klemmelement
- 50: Hülsenanordnung
- 52: erste Hülsenkomponente
- 54: zweite Hülsenkomponente
- 54a: Klemmelement
- 54b: Hülsenelement
- 56: zweite Hülsenkomponente
- 56a: Klemmelement
- 56b: Hülsenelement

- 58: Elastomer-Schicht
- 60: Elastomer-Schicht
- 62: Verbindungselement
- 64: Zahnrad

- A: Abstand Klemmbereich
- D: Durchmesser elastische Welle, Schlüsselweite Sechskantwelle

## Patentansprüche

1. Erntegutaufnehmer umfassend eine elastische Welle (12), die über wenigstens zwei Wellenlagerelemente (14a, 14b, 14c) drehbar gelagert ist, wobei die Wellenlagerelemente (14a, 14b, 14c) mit einer Bodenführungseinheit (16) verbunden sind, **dadurch gekennzeichnet, dass** zwischen der elastischen Welle (12) und den Wellenlagerelementen (14a, 14b, 14c) eine Hülsenanordnung (24, 28, 30, 50), umfassend wenigstens eine Hülsenkomponente, drehfest gegenüber der elastischen Welle (12) angeordnet ist, wobei die Hülsenkomponente wenigstens bereichsweise über wenigstens ein Elastomer-Element (36, 58, 60) mit der elastischen Welle (12) verbunden ist.

2. Erntegutaufnehmer nach Anspruch 1, **dadurch gekennzeichnet, dass** das Elastomer-Element (36, 58, 60) am Ende der Hülsenanordnung (30, 50) angeordnet ist.

3. Erntegutaufnehmer nach Anspruch 1, **dadurch gekennzeichnet, dass** die Hülsenanordnung (30, 50) wenigstens bereichsweise über ein Verbindungselement (38) mit der Welle (12) verbunden ist, wobei das Elastomer-Element (36, 58, 60) im Bereich des Verbindungselements (38) angeordnet ist.

4. Erntegutaufnehmer nach Anspruch 3, **dadurch gekennzeichnet, dass** das Verbindungselement (38) in Form eines Klemmelements (40) ausgestaltet ist.

5. Erntegutaufnehmer nach Anspruch 3, **dadurch gekennzeichnet, dass** das Verbindungselement (38) als Formschlusselement ausgestaltet ist.

6. Erntegutaufnehmer nach einem der vorhergehenden Ansprüche, **dadurch gekennzeichnet, dass** die Hülsenanordnung (30, 50) eine erste Hülsenkomponente (32, 52) und eine zweite Hülsenkomponente (34, 54, 56) aufweist, die über das Elastomer-Element (36, 58, 60) verbunden sind.

7. Erntegutaufnehmer nach Anspruch 6, **dadurch gekennzeichnet, dass** die erste Hülsenkomponente (32, 52) und die zweite Hülsenkomponente (34, 54, 56) konzentrisch überlappend gelagert sind.

8. Erntegutaufnehmer nach einem der vorhergehenden Ansprüche, **dadurch gekennzeichnet, dass** das Elastomer-Element (36, 58, 60) asymmetrisch ausgebildet ist, wobei dieses in seinem axialen Mittenbereich einen verjüngten Längsschnitt aufweist.

9. Erntegutaufnehmer nach Anspruch 7, **dadurch gekennzeichnet, dass** der Klemmbereich der ersten Hülsenkomponente (30) und der Klemmbereich der zweiten Hülsenkomponente (40) im axialen Abstand (A) angeordnet sind, wobei das Verhältnis des Durchmessers der elastischen Welle (12) zum Abstand (A) kleiner als 1/4 ist, insbesondere im Bereich von 1/5 und 1/10 liegt.

## Claims

1. Crop collecting device comprising a flexible shaft (12) which is rotatably supported by at least two shaft bearing elements (14a, 14b, 14c), said shaft bearing elements (14a, 14b, 14c) being connected to a ground tracking unit (16), **characterized in that** a sleeve arrangement (24, 28, 30,50) comprising at least one sleeve component is mounted between said flexible shaft (12) and said shaft bearing elements (14a, 14b, 14c) for co-rotation with said flexible shaft (12), with at least portions of said sleeve component being connected to said flexible shaft (12) via at least one elastomer element (36, 58, 60).

2. Crop collecting device according to claim 1, **characterized in that** said elastomer element (36, 58, 60) is located at the end of the sleeve arrangement (30, 50).

3. Crop collecting device according to claim 1, **characterized in that** at least portions of said sleeve arrangement (30, 50) are connected to said shaft (12) via a connecting element (38), said elastomer element (36, 58, 60) being located in the area of the connecting element (38).

4. Crop collecting device according to claim 3, **characterized in that** said connecting element (38) is designed in the form of a clamping element (40).

5. Crop collecting device according to claim 3, **characterized in that** said connecting element (38) is designed as a positive-locking element.

6. Crop collecting device according to one of the preceding claims, **characterized in that** said sleeve arrangement (30, 50) includes a first sleeve component (32, 52) and a second sleeve component (34, 54, 56) which are connected by the elastomer element (36, 58, 60).

7. Crop collecting device according to claim 6, **characterized in that** said first sleeve component (32, 52) and said second sleeve component (34, 54, 56) are mounted in a concentrically overlapping manner.

8. Crop collecting device according to one of the preceding claims, **characterized in that** said elastomer element (36, 58, 60) is of an asymmetrical design and that its axial central area is of a tapered longitudinal section.

9. Crop collecting device according to claim 7, **characterized in that** the clamping area of said first sleeve component (30) and the clamping area of said second sleeve component (40) are arranged at an axial distance (A) from each other, with the ratio of the diameter of the flexible shaft (12) to said distance (A) being less than ¼, in particular between 1/5 and 1/10.

## Revendications

1. Récolteuse comprenant un arbre élastique (12), qui est monté en rotation par l'intermédiaire d'au moins deux éléments de palier d'arbre (14a, 14b, 14c), dans laquelle les éléments de palier d'arbre (14a, 14b, 14c) sont reliés à une unité de guidage au sol (16), **caractérisée en ce qu'**un ensemble manchon (24, 28, 30, 50), comprenant au moins un composant de manchon, est agencé de manière solidaire en rotation par rapport à l'arbre élastique (12) entre l'arbre élastique (12) et les éléments de palier d'arbre (14a, 14b, 14c), dans laquelle le composant de manchon est relié au moins par endroits à l'arbre élastique (12) au moyen d'au moins un élément élastomère (36, 58, 60).

2. Récolteuse selon la revendication 1, **caractérisée en ce que** l'élément élastomère (36, 58, 60) est agencé à l'extrémité de l'ensemble manchon (30, 50).

3. Récolteuse selon la revendication 1, **caractérisée en ce que** l'ensemble manchon (30, 50) est relié au moins par endroits à l'arbre (12) par l'intermédiaire d'un élément de liaison (38), dans laquelle l'élément élastomère (36, 58,60) est agencé dans la zone de l'élément de liaison (38).

4. Récolteuse selon la revendication 3, **caractérisée en ce que** l'élément de liaison (38) est réalisé sous la forme d'un élément de serrage (40).

5. Récolteuse selon la revendication 3, **caractérisée en ce que** l'élément de liaison (38) est réalisé sous la forme d'un élément de coopération de formes.

6. Récolteuse selon l'une quelconque des revendications précédentes, **caractérisée en ce que** l'ensemble manchon (30, 50) comprend un premier composant de manchon (32, 52) et un deuxième composant de manchon (34, 54, 56), qui sont reliés par l'intermédiaire de l'élément élastomère (36, 58, 60).

7. Récolteuse selon la revendication 6, **caractérisée en ce que** le premier composant de manchon (32, 52) et le deuxième composant de manchon (34, 54, 56) sont montés de manière à se chevaucher de façon concentrique.

8. Récolteuse selon l'une quelconque des revendications précédentes, **caractérisée en ce que** l'élément élastomère (36, 58, 60) est asymétrique, dans laquelle celui-ci présente dans sa zone centrale axiale une coupe longitudinale rétrécie.

9. Récolteuse selon la revendication 7, **caractérisée en ce que** la zone de serrage du premier composant de manchon (30) et la zone de serrage du deuxième composant de manchon (40) sont agencés à une distance axiale (A), dans laquelle le rapport entre le diamètre de l'arbre élastique (12) et la distance (A) est inférieur à 1/4, en particulier se situe dans la plage de 1/5 à 1/10.
